# EUROPÄISCHE PATENTSCHRIFT

(11) **EP 3 451 712 B1**
(45) Veröffentlichungstag und Bekanntmachung des Hinweises auf die Patenterteilung: **17.07.2019**
(21) Anmeldenummer: 17188906.6
(22) Anmeldetag: 31.08.2017
(51) Int. Cl.: H04W 4/021, H04W 84/18, H04W 4/90

(54) **KOMMUNIKATIONS- UND ORTUNGSSYSTEM**
COMMUNICATION AND LOCATION SYSTEM
SYSTÈME DE COMMUNICATION ET DE POSITIONNEMENT

(43) Veröffentlichungstag der Anmeldung: 06.03.2019
(73) Patentinhaber: Deutsche Telekom AG, 53113 Bonn (DE)
(72) Erfinder: Montoya-Capote, Mike, 04109 Leipzig (DE); Rick, Matthias, 04277 Leipzig (DE); Jochheim, Edgar, 82547 Eurasburg (DE); Jakubek, Sascha Christian, 50858 Köln (DE)
(74) Vertreter: Patentship Patentanwaltsgesellschaft mbH

(56) Entgegenhaltungen:
- US-A1- 2006 223 518
- US-A1- 2015 111 524

## Beschreibung

Die vorliegende Erfindung umfasst ein Kommunikations- und Ortungssystem mit einer Gruppe von zumindest zwei Kommunikationsgeräten, die mit einem drahtlosen Peer-to-Peer Kommunikationsnetzwerk untereinander verbunden sind. Ferner betrifft die Erfindung ein entsprechendes Verfahren zur Kommunikation und Ortung einer Gruppe von zumindest zwei Kommunikationsgeräten über ein drahtloses Peer-to-Peer Kommunikationsnetzwerk. Insbesondere betrifft die Erfindung ein sogenanntes "Emergency Beacon", d.h. ein Verfahren zur Kommunikation und Ortung mit über Funk in einem Peer-to-Peer Netzwerk verbundener Geräte, die jeweils einen Notruf auslösen können.

Unter einem mobilen Notrufsystem versteht man ein System, das es Angehörigen von Risikogruppen jederzeit erlaubt, im Notfall mit ihrem Mobiltelefon Hilfe oder Serviceleistungen zu rufen. Der Mobile Notruf basiert auf einem Mobiltelefon mit einer speziellen Notruftaste, am besten mit integriertem GPS. Sollte eine Ortung über GPS nicht möglich sein, wird eine Flächenortung über GSM angestoßen, da diese auch bei fehlendem GPS-Signal funktioniert aber nicht so genau ist. Wird diese betätigt, wird der Aufenthaltsort des Besitzers per GPS bestimmt und eine (zumeist Freisprech-)Verbindung mit der Leitstelle des Systembetreibers hergestellt. Die Positionsangabe wird dann der zuständigen Rettungsleitstelle übermittelt und durch die Übertragung der Rufnummer werden in der EDV-Datenbank automatisch die hinterlegten wichtigen Informationen zur Person aufgerufen.

Bei der Anwendung des mobilen Notrufsystems auf eine Gruppe von Personen, die gemeinsam etwas unternehmen möchten, z.B. Bergsteigern, Wanderern, Jägern oder auch Touristen ist dieses Notrufsystem jedoch ineffizient. Ein Notruf sollte dann ausgelöst werden, wenn sich ein Mitglied der Gruppe von der Gruppe entfernt hat und z.B. im Wald, in den Bergen oder auch im Verkehr einer Großstadt nicht mehr auffindbar ist. Das Notrufsystem sollte also selbstständig erkennen, ob sich alle Gruppenmitglieder innerhalb einer vorgegebenen Reichweite befinden und andernfalls selbsttätig einen Notruf auslösen. Ferner sollte das Notrufsystem energieeffizient arbeiten, da gerade Gruppen, die sich beispielsweise im Gelände aufhalten, üblicherweise keine ausreichende Energieversorgung für die Mobiltelefone zur Verfügung steht.

Dokument US 2006223518 offenbart ein Positionsdaten-Sendeverfahren für ein GPS-System (Global Positioning System) für ein drahtloses Gerät, das bei der Überwachung eines Kindstandorts verwendet wird, auch für eine Peer-to-Peer-Ausführungsform. Die drahtlosen Geräte in einer Gruppe, für die die Ortsverfolgung aktiviert ist, senden ihre GPS-Positionsdaten regelmäßig an alle anderen Mitglieder der Gruppe. Eine Anfrage wird an ein Telefon gesendet und wenn eine Person sie nicht beantwortet, wird davon ausgegangen, dass ein Notfall eingetreten ist.

Es ist die Aufgabe der vorliegenden Erfindung, ein Konzept für eine effiziente Ortung von Personengruppen zu schaffen, das in der Lage ist, selbsttätig zu erkennen, ob sich Personen von der Gruppe entfernt haben und, falls erforderlich, einen Notruf auszulösen. Diese Aufgabe wird durch die Merkmale der unabhängigen Ansprüche gelöst. Vorteilhafte Weiterbildungsformen sind Gegenstand der abhängigen Ansprüche.

Im Folgenden werden Peer-to-Peer Kommunikationsnetzwerke beschrieben. Peer-to-Peer (P2P) Verbindung ist eine synonyme Bezeichnungen für eine Kommunikation unter Gleichen, hier bezogen auf ein Kommunikationsnetz mit mehreren Kommunikationseinrichtungen, z.B. Computern. Man spricht auch von Querkommunikation. In einem reinen Peer-to-Peer-Netz sind alle Kommunikationseinrichtungen bzw. Computer gleichberechtigt und können sowohl Dienste in Anspruch nehmen, als auch zur Verfügung stellen. In modernen P2P-Netzwerken werden die Netzwerkteilnehmer jedoch häufig abhängig von ihrer Qualifikation in verschiedene Gruppen eingeteilt, die spezifische Aufgaben übernehmen.

Im Folgenden werden verschiedene Funktechnologien für die Funkschnittstelle im Peer-to-Peer Kommunikationsnetzwerk oder im Mobilfunknetzwerk nach extern beschrieben.
Bei den Funktechnologien kann es sich um Funkstandards eines drahtlosen Nahbereichsnetzes handeln, wie z.B. WLAN, Bluetooth, ZigBee, etc. Als Protokolle kommen proprietäre Lösungen mit zeitlichem Determinismus und möglichst geringem Overhead (welcher beispielsweise TCP/IP mit sich bringen würde) zum Einsatz.
Bei den Funktechnologien kann es sich um Mobilfunkstandards handeln wie z.B. 5G, LTE, UMTS, GSM, etc. Insbesondere kann es sich um eine NB-loT (Narrowband Internet-of-Things) Verbindung handeln.

In der folgenden Beschreibung werden verschiedene Kommunikationsgeräte beschrieben. Bei den Kommunikationsgeräten handelt es sich um Geräte, die spezielle Kommunikationsfunktionen ausführen können, wie z.B. Kommunikation über ein WLAN Netz oder ein Mobilfunknetz. Das Kommunikationsgerät kann Mikroprozessoren, Mikrochips, FPGAs, ASICs und/oder DSPs umfassen. Das Kommunikationsgerät kann beispielsweise über einen Prozessor, ein Modem, eine Netzwerkkarte, einen Netzwerkabschluss oder einen Netzwerkadapter verfügen.

Die im Folgenden vorgestellten Verfahren, Geräte und Systeme können von verschiedener Art sein. Die einzelnen beschriebenen Elemente können durch Hardware- und/oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Gemäß einem ersten Aspekt betrifft die Erfindung ein Kommunikations- und Ortungssystem, mit: einer Gruppe von zumindest zwei Kommunikationsgeräten; und einem drahtlosen Peer-to-Peer Kommunikationsnetzwerk, das ausgebildet ist, die Gruppe von Kommunikationsgeräten über Funk untereinander zu verbinden, wobei jedes Kommunikationsgerät der Gruppe von Kommunikationsgeräten eine Ortungseinrichtung und eine Kommunikationseinrichtung aufweist, wobei die Ortungseinrichtung ausgebildet ist, eine geographische Position des Kommunikationsgeräts zu bestimmen, wobei die Kommunikationseinrichtung ausgebildet ist, die geographische Position des Kommunikationsgeräts über das Peer-to-Peer Kommunikationsnetzwerk an zumindest ein anderes Kommunikationsgerät der Gruppe von Kommunikationsgeräten zu übertragen. Ein solches Kommunikations- und Ortungssystem bewirkt eine effiziente Ortung von Personengruppen, da diese nicht über das externe Mobilfunk einen Notruf auslösen müssen, sondern ein internes Peer-to-Peer Netzwerk nutzen, welches zum einen energieeffizienter ist, da die Sender weniger Leistung benötigen, da nur geringere Entfernungen zu überbrücken sind und zum anderen das interne Peer-to-Peer Netzwerk als Überwachungsmittel genutzt werden kann, um automatisch festzustellen, ob eine Notfallsituation vorliegt, d.h. ob sich eine Person aus dem vorgegebenen Bereich entfernt hat. Damit kann automatisch detektiert werden, ob ein Notruf ausgelöst werden soll und eine evtl. verletzte Person, die nicht mehr in der Lage ist, ihr Mobiltelefon zu betätigen, wird automatisch erkannt.

Die Ortungseinrichtung kann einen GNSS ("Global Navigation Satellite System")-Empfänger, insbesondere einen GPS ("Global Positioning System") Satellitenemfänger umfassen, mit dem die geographische Position des Kommunikationsgeräts bestimmt werden kann. Über das Peer-to-Peer Netzwerk ist eine einmal bestimmte geographische Position eines Kommunikationsteilnehmers in dem gesamten Netzwerk sofort verfügbar. Über vorhandene Satellitennotrufsysteme entsteht immer eine Verzögerung bei der Übermittlung der Positionsdaten an den Retter, die bei Peer-to-Peer Systemen nicht mehr entsteht.

Gemäß einer Ausführungsform ist das Kommunikations- und Ortungssystem ausgebildet, basierend auf den geographischen Positionen der Kommunikationsgeräte der Gruppe von Kommunikationsgeräten zu detektieren, ob zumindest eines der Kommunikationsgeräte sich außerhalb eines vorgegebenen geographischen Bereichs befindet.

Ein solches Kommunikations- und Ortungssystem bietet den Vorteil, dass anhand des vorgebbaren geographischen Bereichs schnell und zuverlässig detektiert werden kann, ob sich noch alle Mitglieder der Gruppe innerhalb eines bestimmten Bereichs, Gebiets oder Raumes befinden.

Gemäß einer Ausführungsform des Kommunikations- und Ortungssystems basiert der vorgegebene geographische Bereich auf einer Funkreichweite des Peer-to-Peer Kommunikationsnetzwerks oder ist unabhängig von der Funkreichweite des Peer-to-Peer Kommunikationsnetzwerks festlegbar.

Dies bietet den Vorteil, dass die Funkreichweite des Peer-to-Peer Netzes eine grobe Bereichsangabe ermöglicht, über welche ein Prozessor den vorzugebenden Bereich ermitteln kann. Durch die Funkreichweite lässt sich der vorzugebende Bereich dynamisch ermitteln, d.h. abhängig von den jeweiligen Orten der Kommunikationsgeräte. Alternativ kann der geographische Bereich auch unabhängig von der Funkreichweite festgelegt werden, z.B. bei Seenotrettung innerhalb eines bestimmten Seegebietes, das sich weiter erstrecken kann als die Funkreichweite der einzelnen Geräte oder z.B. bei Bauarbeitern, welche das Peer-to-Peer Netz nutzen auf den Bereich der Baustelle, etc.

Gemäß einer Ausführungsform des Kommunikations- und Ortungssystems umfasst die Gruppe von zumindest zwei Kommunikationsgeräten mobile Kommunikationsgeräte, und der vorgegebene geographische Bereich ist abhängig von einer Bewegung der Gruppe von zumindest zwei Kommunikationsgeräten spezifiziert.

Dies bietet den Vorteil, dass der vorgegebene geographische Bereich sich dynamisch mit den Teilnehmern mitbewegt, so dass er sich im Gelände den jeweiligen Positionen der einzelnen Mitgliedern der Gruppe anpasst.

Gemäß einer Ausführungsform des Kommunikations- und Ortungssystems nehmen zumindest zwei Kommunikationsgeräte der Gruppe von Kommunikationsgeräten als Notruf-Geräte eine Notruf-Funktion in dem Peer-to-Peer Kommunikationsnetzwerk wahr und sind ausgebildet, einen Notruf auszulösen, wenn zumindest eines der Kommunikationsgeräte sich außerhalb des vorgegebenen geographischen Bereichs befindet.

Dies bietet den Vorteil, dass die komplexen Notruffunktionen nur auf speziellen Geräten implementiert sein müssen, was den Aufwand des gesamten Systems reduziert.

Gemäß einer Ausführungsform des Kommunikations- und Ortungssystems sind die zumindest zwei Notruf-Geräte sowohl untereinander über das Peer-to-Peer Kommunikationsnetzwerk miteinander verbunden und verfügen auch über eine externe Verbindung über ein Mobilfunknetzwerk, insbesondere ein GSM (Global System for Mobile Communication), LTE (Long Term Evolution), 4G (vierte Generation) und/oder 5G (fünfte Generation) Netzwerk.

Dies bietet den Vorteil, dass die beiden Notruf-Geräte sich abstimmen können, über welches die Notrufzentrale gerufen wird. Außerdem bieten zwei Notruf-Geräte eine gewisse Redundanz, was für Sicherheit des Systems sorgt.

Gemäß einer Ausführungsform des Kommunikations- und Ortungssystems sind die zumindest zwei Notruf-Geräte ausgebildet, den Notruf alternativ oder zusätzlich zur Verbindung über das Mobilfunknetzwerk über eine Verbindung über ein Internet-of-Things (IoT)-Netzwerk auszulösen.

Dies bietet den Vorteil, dass für die Verbindung über ein IoT-Netzwerk weniger Leistung benötigt wird als über die Verbindung über ein Mobilfunknetzwerk, so dass der Notruf auch dann noch ausgelöst werden kann, wenn die Batterie der jeweiligen Notruf-Geräte nur noch schwach geladen ist. IoT-Netzwerke haben den Vorteil einer größeren Durchdringung in schwer zugänglichem Gelände mit Hindernissen, z.B. Berge und Wald, oder auf See. Das IoT-Netzwerk kann z.B. ein Netzwerk nach dem NB loT (Narrowband loT) Standard sein. Damit verbundene Geräte können einen geringeren Energieverbrauch haben und damit eine längere aktive Operationsfähigkeit einer Geräte-Batterie oder eines Geräte-Akkus.

Gemäß einer Ausführungsform des Kommunikations- und Ortungssystems weist zumindest eines der zwei Notruf-Geräte eine Kommunikationsschnittstelle zu einem Mobiltelefon, insbesondere einem Smartphone auf, und das zumindest eine Notruf-Gerät ist ausgebildet, die externe Verbindung über die Kommunikationsschnittstelle zu dem Mobiltelefon aufzubauen.

Dies bietet den Vorteil, dass das Notruf-Gerät einfach ausgeführt sein kann, da es nicht über einen Mobilfunkadapter verfügen muss, es reicht eine einfache Nahbereichsverbindung zum Mobiltelefon des Nutzers.

Gemäß einer Ausführungsform des Kommunikations- und Ortungssystems ist die Kommunikationsschnittstelle zu dem Mobiltelefon ausgebildet, Daten über SMS (Short Message Service) und/oder über eine IP (Internet-Protokoll)-Verbindung zu senden.

Dies bietet den Vorteil, dass Daten in flexiblen Datenformaten gesendet werden können. Über SMS beispielsweise können kurze, knapp gehaltene Informationen versandt werden, während über IP umfassende Informationsmengen übertragen werden können. Die über IP versandten Informationen kann ein Smartphone oder ein Computer in einer entsprechenden Applikation direkt verarbeiten und entsprechende Maßnahmen einleiten.

Gemäß einer Ausführungsform des Kommunikations- und Ortungssystems umfasst das Peer-to-Peer Kommunikationsnetzwerk ein GSM, LTE, 4G und/oder 5G Netzwerk und/oder zumindest teilweise eine optische Signalübertragung.

Dies bietet den Vorteil, dass im ersteren Fall das Peer-to-Peer Kommunikationsnetzwerk auch größere Reichweiten überbrücken kann und beispielsweise auch weltweit verteilte Kommunikationsteilnehmer miteinander koppeln kann. Im zweiten Fall kann die Funkübertragung auch optische Strecken umfassen und damit ein Netzwerk ausbilden, dessen Verbindungen jeweils Sichtweiten zwischen den einzelnen Teilnehmern umfassen.

Gemäß einer Ausführungsform des Kommunikations- und Ortungssystems nimmt zumindest ein Kommunikationsgerät der Gruppe von zumindest zwei Kommunikationsgeräten als Master-Gerät eine Master-Funktion in dem Peer-to-Peer Kommunikationsnetzwerk wahr; und zumindest ein anderes Kommunikationsgerät der Gruppe von zumindest zwei Kommunikationsgeräten nimmt als Slave-Gerät eine Slave-Funktion in dem Peer-to-Peer Kommunikationsnetzwerk wahr und ist dem Master-Gerät zugeordnet.

Dies bietet den Vorteil, dass ein Master/Slave Netzwerk aufgebaut werden kann, bei dem nicht alle Geräte den gleichen Funktionsumfang haben und damit einfacher gestaltet sein können. So brauchen beispielsweise nur die Master-Geräte über komplexe Netzwerkfunktionen verfügen, welche sie für die ihnen zugeordneten Slave-Geräte übernehmen können.

Gemäß einer Ausführungsform des Kommunikations- und Ortungssystems ist das Master-Gerät ausgebildet, die geographischen Positionen der ihm zugeordneten Slave-Geräte über das Peer-to-Peer Kommunikationsnetzwerk zu empfangen und basierend auf den empfangenen geographischen Positionen zu überwachen, ob die Slave-Geräte sich innerhalb des vorgegebenen geographischen Bereichs befinden.

Dies bietet den Vorteil, dass das Master-Gerät jederzeit überprüfen kann, ob ein Slave-Gerät sich noch innerhalb des vorgegebenen Bereichs befindet und andernfalls für das Slave-Gerät einen Notruf auslösen kann.

Gemäß einer Ausführungsform des Kommunikations- und Ortungssystems ist das Slave-Gerät ausgebildet, die geographische Position des ihm zugeordneten Master-Geräts über das Peer-to-Peer Kommunikationsnetzwerk zu empfangen und ein Alarmsignal auszulösen, wenn das Slave-Gerät basierend auf den geographischen Positionen des Slave-Geräts und des Master-Geräts detektiert, dass sich das Slave-Gerät außerhalb des vorgegebenen geographischen Bereichs befindet.

Dies bietet den Vorteil, dass das Slave-Gerät dem Nutzer signalisieren kann, dass er dabei ist sich von der Gruppe zu entfernen.

Gemäß einer Ausführungsform des Kommunikations- und Ortungssystems weist das Slave-Gerät eine Anzeige auf, welche ausgebildet ist, basierend auf den geographischen Positionen des Slave-Geräts und des Master-Geräts eine Richtung zu dem Master-Gerät anzuzeigen.

Dies bietet den Vorteil, dass das Slave-Gerät dem Nutzer mitteilen kann, in welche Richtung er sich bewegen sollte, um wieder Anschluss an die Gruppe zu finden. Dies ist beispielsweise in unübersichtlichem Gelände wie Wald, Bergen oder Wüste von Bedeutung.

Gemäß einer Ausführungsform des Kommunikations- und Ortungssystems umfasst das Slave-Gerät einen Magnetometer-Sensor und/oder einen Beschleunigungssensor und ist ausgebildet, die Richtung zu dem Master-Gerät basierend auf Messdaten des Magnetometer-Sensors und/oder des Beschleunigungssensors, insbesondere in Verbindung mit den eigenen GPS-Koordinaten und denen des Master-Geräts (was auch als Bearing bezeichnet wird), zu bestimmen.

Dies bietet den Vorteil, dass diese Sensoren eine einfache Implementierung bieten, um eine Richtung des Slave-Geräts relativ zum Master-Gerät zu bestimmen.

Gemäß einer Ausführungsform des Kommunikations- und Ortungssystems verfügt das Slave-Gerät über eine Befestigungseinrichtung, die ausgebildet ist, das Slave-Gerät an einem Gegenstand zu befestigen.

Dies bietet den Vorteil, dass das Slave-Gerät nicht vom Nutzer in der Hand getragen werden muss, sondern sich leicht an einem Gegenstand, z.B. einem Rucksack oder einer Tasche befestigen lässt. Dies vereinfacht die Nutzung des Systems.

Gemäß einer Ausführungsform des Kommunikations- und Ortungssystems ist das Slave-Gerät auf ein Mobiltelefon, insbesondere ein Smartphone, aufsteckbar.

Dies bietet den Vorteil, dass der Nutzer das Slave-Gerät einfach auf sein vorhandenes Smartphone aufstecken kann, d.h. es ist leicht und handlich mitzunehmen und zu nutzen.

Gemäß einer Ausführungsform des Kommunikations- und Ortungssystems ist das Slave-Gerät an einem Gerät, insbesondere einer Feuerwaffe oder einer Maschine, befestigbar oder integrierbar, und ausgebildet, eine Richtung zu einem anderen Gerät, insbesondere einer anderen Feuerwaffe oder einer anderen Maschine, an dem das Master-Gerät befestigbar oder integrierbar ist, anzuzeigen.

Dies bietet den Vorteil, dass beispielsweise ein Jäger an seinem Jagdgewehr die Richtung zu einem Jagdkollegen erkennen kann und somit vermeiden kann, in diese Richtung zu schießen, z.B. weil er in dieser Richtung eine Bewegung erkannt hat, die er irrtümlicherweise für ein Beutetier gehalten hat. Analoges gilt für Soldaten, die damit erkennen können, ob sich in der angezeigten Richtung ein Kamerad befindet oder es sich um den Feind handelt. Die beschriebene Anzeige der Richtung gilt ebenfalls bei Integration oder Anbringung an Maschinen, z.B. Motorsägen, Baugeräten, etc., um Bauarbeitern die Richtung von Kollegen anzuzeigen, z.B. um zu verhindern, dass ein Baum in Richtung eines Kollegen gefällt wird oder dass eine Last in Richtung eines Kollegen abgelassen wird.

Die Indikation kann optisch oder auch akustisch erfolgen. Bei der akustischen Indikation kann beispielsweise ein Warnton erzeugt werden, wenn das Gerät in Richtung des anderen Geräts ausgerichtet wird. Alternativ und/oder zusätzlich kann die akustische Indikation die Richtung in Worten, z.B. Norden, Nord-Ost, etc. anzeigen.

Gemäß einer Ausführungsform des Kommunikations- und Ortungssystems ist zumindest ein Kommunikationsgerät der Gruppe von Kommunikationsgeräten als ein Smartphone ausgebildet.

Dies bietet den Vorteil, dass die beschriebene Funktionalität direkt in ein Smartphone integriert werden kann, z.B. als Software-Applikation oder in Hardware, so dass kein eigenständiges externes Gerät für die Kommunikation notwendig ist. Alternativ kann natürlich auch jedes andere mobile Gerät, wie z.B. Notebook, TabletPC, Kamera, Smart-Watch, etc. dafür genutzt werden.

Gemäß einem zweiten Aspekt betrifft die Erfindung ein Verfahren zur Kommunikation und Ortung einer Gruppe von zumindest zwei Kommunikationsgeräten über ein drahtloses Peer-to-Peer Kommunikationsnetzwerk, das ausgebildet ist, die Gruppe von Kommunikationsgeräten über Funk untereinander zu verbinden, mit folgenden Schritten: Bestimmen einer geographischen Position eines jeweiligen Kommunikationsgeräts der Gruppe von Kommunikationsgeräten, durch eine Ortungseinrichtung des jeweiligen Kommunikationsgeräts; Übertragen der geographischen Position des jeweiligen Kommunikationsgeräts über das Peer-to-Peer Kommunikationsnetzwerk an zumindest ein anderes Kommunikationsgerät der Gruppe von Kommunikationsgeräten; und Detektieren, basierend auf den geographischen Positionen der Kommunikationsgeräte der Gruppe von Kommunikationsgeräten, ob zumindest eines der Kommunikationsgeräte sich außerhalb eines vorgegebenen geographischen Bereichs befindet.

Ein solches Verfahren zur Kommunikation und Ortung bewirkt eine effiziente Ortung von Personengruppen, da diese nicht über das externe Mobilfunk einen Notruf auslösen müssen, sondern ein internes Peer-to-Peer Netzwerk nutzen, welches zum einen energieeffizienter ist, da die Sender weniger Leistung benötigen, da nur geringere Entfernungen zu überbrücken sind und zum anderen das interne Peer-to-Peer Netzwerk als Überwachungsmittel genutzt werden kann, um automatisch festzustellen, ob eine Notfallsituation vorliegt, d.h. ob sich eine Person aus dem vorgegebenen Bereich entfernt hat. Damit kann automatisch detektiert werden, ob ein Notruf ausgelöst werden soll und eine evtl. verletzte Person, die nicht mehr in der Lage ist, ihr Mobiltelefon zu betätigen, wird automatisch erkannt.

Gemäß einer Ausführungsform umfasst das Verfahren ferner den Schritt: Auslösen eines Notrufs, wenn zumindest eines der Kommunikationsgeräte sich außerhalb des vorgegebenen geographischen Bereichs befindet.

Dies bietet den Vorteil, dass automatisch erkannt werden kann, ob sich ein Mitglied der Gruppe außerhalb des vorgegebenen Bereichs aufhält und dann ein Notruf ausgelöst werden kann, ohne dass das evtl. verletzte Mitglied der Gruppe selbst aktiv werden muss.

Gemäß einem dritten Aspekt betrifft die Erfindung ein Verfahren und/oder ein System zur Kommunikation und Ortung mit über Funk in einem Peer-to-Peer Netzwerk verbundener Geräte, die jeweils Notrufe auslösen können.

Im Folgenden werden weitere Ausführungsformen der Verfahren und Systeme nach den oben beschriebenen Aspekten dargestellt.

Gemäß einer Ausführungsform umfassen die Geräte mindestens zwei Notrufgeräten die gleichzeitig sowohl mit einem Funknetzwerk, z.B. GSM, LTE, 4 G, 5G, als auch untereinander über eine Peer-to-Peer Funk- oder Licht-Verbindung verbunden sind.

Gemäß einer Ausführungsform übernimmt mindestens ein Gerät die Funktion eines Master-Gerätes in einem Peer-to-peer Gerätenetzwerk, während die anderen Geräte die Funktion eines Slaves besitzen.

Gemäß einer Ausführungsform überprüft das Master-Gerät im Peer-to-Peer Netzwerk permanent, ob andere zugeordnete Slave-Geräte in der Reichweite des Peer-to-Peer Netzwerkes bzw. dort angemeldet sind und zeigt dem Nutzer dies über ein Licht oder Ton-Signal an.

Gemäß einer Ausführungsform überprüft ein Slave-Gerät permanent, ob ein Master-Gerät in der Peer-to-peer Netzwerkreichweite ist und zeigt dies durch ein Licht- oder Ton-Signal dem Nutzer an.

Gemäß einer Ausführungsform verfügen alle Notrufgeräte über einen Satellitenempfänger für eine Geo-Position, z.B. GPS, Galileo, Glonass, etc., und besitzen eine Magnetometer-Funktion oder ebenso einen Beschleunigungssensor und ebenso einen Prozessor, der die aktuelle geographische Position berechnet (was als Bearing bezeichnet wird).

Gemäß einer Ausführungsform sendet ein Slave-Gerät seine geographische Position über die Peer-to-peer Funk-Verbindung an das Master-Gerät und das Master-Gerät sendet seine Geo-Position ebenfalls über die Peer-to-peer Funkverbindung an alle Slave-Geräte.

Gemäß einer Ausführungsform berechnet der Prozessor des Slave-Gerätes unter Nutzung der eigenen Magnetometerfunktion die Geo-Richtung des Masters und zeigt durch ein Licht-Signal oder eine Visualisierung auf dem Gehäuse des Slave Gerätes die orientierte Richtung der Master-Position an.

Gemäß einer Ausführungsform berechnet der Prozessor des Master-Gerätes unter Nutzung der eigenen Magnetometerfunktion die relative geographische Richtung bzw. Orientierung der Slave-Geräte zum Mastergerät und zeigt diese nach Auswahl des jeweiligen Slave Gerätes durch ein Licht-Signal oder einer Visualisierung auf dem Gehäuse des Master Gerätes an.

Gemäß einer Ausführungsform zeigen alle Notrufgeräte unter Nutzung der GPS- und Magnetometerfunktion die Himmelsrichtung Nord bzw. den magnetischen Nordpol durch ein Lichtsignal oder eine Visualisierung auf dem Gehäuse an.

Gemäß einer Ausführungsform wird durch die Blinkfrequenz des Lichtsignals oder die Leuchtfarbe oder die Leuchtstärke oder Tonintervall oder Tonlautstärke oder Tonhöhe, die Distanz des Slave-Gerätes zum Master-Gerät anzeigt.

Gemäß einer Ausführungsform übernimmt jedes Gerät sowohl die Funktion eines Masters als auch eines Slaves.

Gemäß einer Ausführungsform erfolgt die Zuordnung eines Gerätes mit der Funktion des Master-Gerätes durch den Nutzer aktiv.

Gemäß einer Ausführungsform übernimmt in dem Falle, dass ein Netzwerk von Geräten keinen Master erkennt, automatisch ein Slave-Gerät im Netzwerk die Funktion eines Masters und überträgt diesem wieder die Masterfunktion im Netzwerk vom vorherigen Master, sobald das vorab zugeordnete Mastergerät wieder im Netzwerk aktiv ist und erkannt wird.

Gemäß einer Ausführungsform erfolgt im Netzwerk die Zuordnung eines Master Gerätes auch ohne aktiven Nutzereingriff und wird ad-hoc zufällig einem Gerät vergeben.

Gemäß einer Ausführungsform legt ein Nutzer eine Hierarchie der Geräte im Netzwerk vorab fest, die die Reihenfolge festlegt, welches Gerät als erste die Masterfunktion übernimmt, welches als zweites, wenn das vorherige nicht im Netzwerk erreichbar ist, welches als drittes, wenn beide vorherigen nicht im Netzwerk erreichbar sind, usw.

Gemäß einer Ausführungsform besteht das Peer-to-Peer Netzwerk aus einem Funknetzwerk, welches nur aus den untereinander verbundenen Geräten als Sender und Empfänger besteht.

Gemäß einer Ausführungsform besteht das Peer-to-Peer Netzwerk auch aus einem übergeordneten Funknetzwerk, wie z.B. GSM, 3G, 4G, 5G.

Gemäß einer Ausführungsform besitzen alle Geräte eine SMS-Funktion und können eine SMS an vorab einprogrammierte Nummern senden.

Gemäß einer Ausführungsform versenden alle Geräte auch über ein IP-Protokoll Daten, die ein Smartphone oder ein Computer in einer entsprechenden Applikation verarbeiten kann.

Gemäß einer Ausführungsform besitzen alle Geräte eine Telefonfunktion mit Mikrophon und Lautsprecher besitzen und können vorab einprogrammierte Nummern anrufen sowie Anrufe über ein Funknetzwerk annehmen.

Gemäß einer Ausführungsform sendet ein Gerät bei Auslösung des Notrufes bzw. Betätigung der Notruftaste eine SMS mit der aktuellen geographischen Position an eine Servicenummer.

Gemäß einer Ausführungsform werden alle Geräte über SMS-Kommandos oder über eine IP-Verbindung von einem Smartphone oder Computer mit Hilfe eines Applikationsprogrammes aus programmiert, d.h. z.B. anzurufende Notrufnummern oder SMS Empfänger können einprogrammiert werden.

Gemäß einer Ausführungsform verbindet sich ein Gerät über eine Kabel- oder Funkverbindung, z.B. NFC oder Bluetooth, mit einem Smartphone. Über das Smartphone können dann direkt Daten aus dem Notrufgerät ausgelesen werden oder Daten zur Programmierung an das Notrufgerät gesendet werden.

Gemäß einer Ausführungsform ist das Gerät als aufsteckbare Hülle oder aufsteckbares Zubehör für ein Smartphone gestaltet.

Gemäß einer Ausführungsform enthält die aufsteckbare Hülle oder das aufsteckbare Zubehör als Notrufgerät eine Batterie, die vom Smartphone als zusätzlicher Energiespeicher genutzt werden kann.

Gemäß einer Ausführungsform ist das Gerät in einer Handfeuerwaffe und/oder Gewehr integriert und die Waffen zeigen die Distanz über ein Leuchtfrequenz zur Masterwaffe und den magnetischen Nordpol an.

Gemäß einer Ausführungsform kann das Gerät an einer Handfeuerwaffe oder Gewehr befestigt werden.

Gemäß einer Ausführungsform wird der Notruf auf einem Gerät durch manuelle Betätigung eines Notrufknopfes ausgelöst und über eine Funkverbindung im Peer-to-Peer Netzwerk an alle Peer-to-Peer verbundenen Geräte und in einem übergeordneten Funknetzwerk an eine vorprogrammierte Nummer, z.B. über GSM, gesendet.

Gemäß einer Ausführungsform kann ein Gerät eine Verbindung zu einem IoT-Funknetzwerk aufbauen und ein Signal in das IoT-Funknetzwerk senden.

Gemäß einer Ausführungsform kann ein Gerät zusätzliche Notrufsignal-Standards senden, wie z.B. die eines Lawinen-Piepers oder eines See-Notruf-Signals.

Gemäß einer Ausführungsform kann der Notruf durch einen Wassersensor am Gerät ausgelöst werden, d.h. wenn das Gerät einem See-Notfall, wie Mann-über-Bord, ausgesetzt wird.

Gemäß einer Ausführungsform wird über die Magnetometer-Funktion eine Sturz- oder Schlagwirkung vom Notfallgerät erkannt und automatisch ein Notrufsignal gesendet.

Gemäß einer Ausführungsform kann jedes Gerät über das übergeordnete Netzwerk in Zeitintervallen seine geographische Position an eine Rufnummer senden.

Weitere Ausführungsbeispiele werden Bezug nehmend auf die beiliegenden Zeichnungen erläutert. Es zeigen:
Fig. 1 eine schematische Darstellung eines Kommunikations- und Ortungssystems gemäß einer beispielhaften Ausführungsform;
Fig. 2 eine schematische Darstellung eines Kommunikationsgeräts gemäß einer beispielhaften Ausführungsform; und
Fig. 3 eine schematische Darstellung eines Verfahrens 300 zur Kommunikation und Ortung einer Gruppe von zumindest zwei Kommunikationsgeräten über ein drahtloses Peer-to-Peer Kommunikationsnetzwerk gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

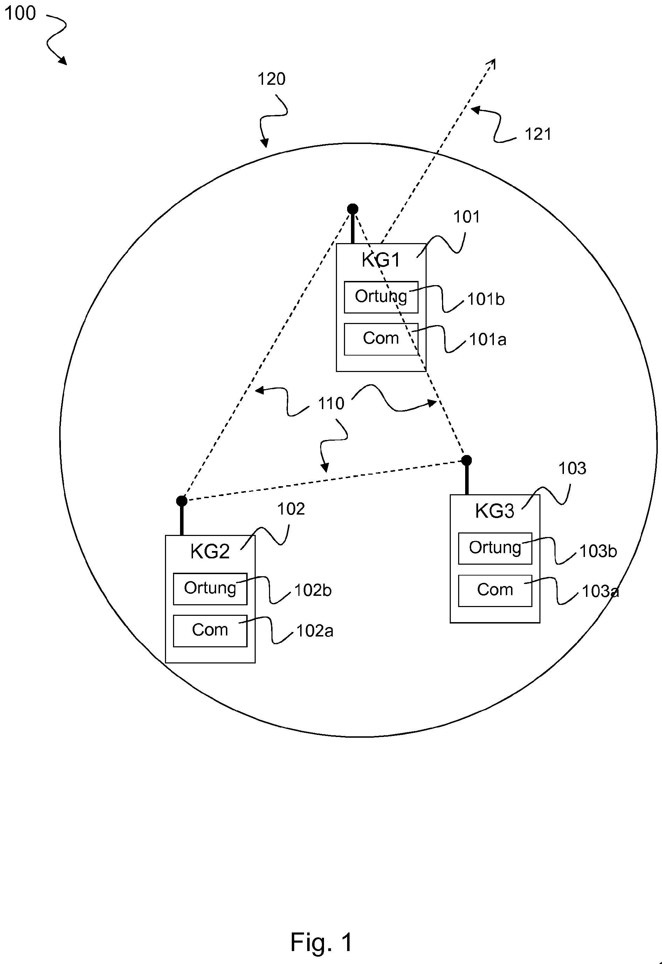

Fig. 1 zeigt eine schematische Darstellung eines Kommunikations- und Ortungssystems 100 gemäß einer beispielhaften Ausführungsform. Das Kommunikations- und Ortungssystem 100 umfasst eine Gruppe von zumindest zwei Kommunikationsgeräten 101, 102, 103 und ein drahtloses Peer-to-Peer Kommunikationsnetzwerk 110, das ausgebildet ist, die Gruppe von Kommunikationsgeräten 101, 102, 103 über Funk untereinander zu verbinden. Jedes Kommunikationsgerät der Gruppe von Kommunikationsgeräten 101, 102, 103 weist eine Ortungseinrichtung 101b, 102b, 103b und eine Kommunikationseinrichtung 101a, 102a, 103a auf. Die Ortungseinrichtung 101b, 102b, 103b ist ausgebildet, eine geographische Position des Kommunikationsgeräts 101, 102, 103 zu bestimmen, z.B. über GPS, Glonass, Galileo, etc. Die Kommunikationseinrichtung 101a, 102a, 103a ist ausgebildet, die geographische Position des Kommunikationsgeräts über das Peer-to-Peer Kommunikationsnetzwerk 110 an zumindest ein anderes Kommunikationsgerät der Gruppe von Kommunikationsgeräten 101, 102, 103 zu übertragen. Das Kommunikations- und Ortungssystem 100 ist ausgebildet, basierend auf den geographischen Positionen der Kommunikationsgeräte der Gruppe von Kommunikationsgeräten 101, 102, 103 zu detektieren, ob zumindest eines der Kommunikationsgeräte sich außerhalb 121 eines vorgegebenen geographischen Bereichs 120 befindet.

Der vorgegebene geographische Bereich 120 kann z.B. auf einer Funkreichweite des Peer-to-Peer Kommunikationsnetzwerks 110 basieren.

Die Gruppe von zumindest zwei Kommunikationsgeräten 101, 102, 103 kann mobile Kommunikationsgeräte umfassen, z.B. Smartphones, Mobiltelefone, etc. Der vorgegebene geographische Bereich 120 kann abhängig von einer Bewegung der Gruppe von zumindest zwei Kommunikationsgeräten 101, 102, 103 spezifiziert sein, d.h. es muss sich nicht um einen ortsfesten Bereich handeln, sondern es kann sich um einen Bereich handeln, der sich mit den Bewegungen der Gruppe mitbewegt.

Zumindest zwei Kommunikationsgeräte der Gruppe von Kommunikationsgeräten 101, 102, 103 können als Notruf-Geräte 200 eine Notruf-Funktion 201 in dem Peer-to-Peer Kommunikationsnetzwerk 110 wahrnehmen und ausgebildet sein, einen Notruf auszulösen, wenn zumindest eines der Kommunikationsgeräte 101 sich außerhalb 121 des vorgegebenen geographischen Bereichs 120 befindet. Unter Umständen reicht es auch aus, wenn nur eines der Geräte eine Notruf-Funktion wahrnimmt.

Die zumindest zwei Notruf-Geräte 200 können sowohl untereinander über das Peer-to-Peer Kommunikationsnetzwerk 110 miteinander verbunden sein als auch über eine externe Verbindung über ein Mobilfunknetzwerk verfügen.

Zumindest eines der zwei Notruf-Geräte 200 kann eine Kommunikationsschnittstelle zu einem Mobiltelefon, insbesondere einem Smartphone aufweisen, z.B. über WLAN, Bluetooth, Zigbee, etc. Das zumindest eine Notruf-Gerät 200 kann ausgebildet sein, die externe Verbindung über die Kommunikationsschnittstelle zu dem Mobiltelefon aufzubauen. Die externe Verbindung über das Mobiltelefon zur Notrufzentrale kann eine LTE, UMTS oder GSM Verbindung über das zellulare Mobilfunknetz sein.

Zumindest ein Kommunikationsgerät der Gruppe von zumindest zwei Kommunikationsgeräten 101, 102, 103 kann als Master-Gerät eine Master-Funktion in dem Peer-to-Peer Kommunikationsnetzwerk 110 wahrnehmen. Zumindest ein anderes Kommunikationsgerät der Gruppe von zumindest zwei Kommunikationsgeräten 101, 102, 103 kann als Slave-Gerät eine Slave-Funktion in dem Peer-to-Peer Kommunikationsnetzwerk 110 wahrnehmen und dem Master-Gerät zugeordnet sein.

Das Master-Gerät kann die geographischen Positionen der ihm zugeordneten Slave-Geräte über das Peer-to-Peer Kommunikationsnetzwerk 110 empfangen und basierend auf den empfangenen geographischen Positionen überwachen, ob die Slave-Geräte sich innerhalb des vorgegebenen geographischen Bereichs 120 befinden.

Das Slave-Gerät kann die geographische Position des ihm zugeordneten Master-Geräts über das Peer-to-Peer Kommunikationsnetzwerk 110 empfangen und ein Alarmsignal auszulösen, wenn das Slave-Gerät basierend auf den geographischen Positionen des Slave-Geräts und des Master-Geräts detektiert, dass sich das Slave-Gerät außerhalb des vorgegebenen geographischen Bereichs 120 befindet.

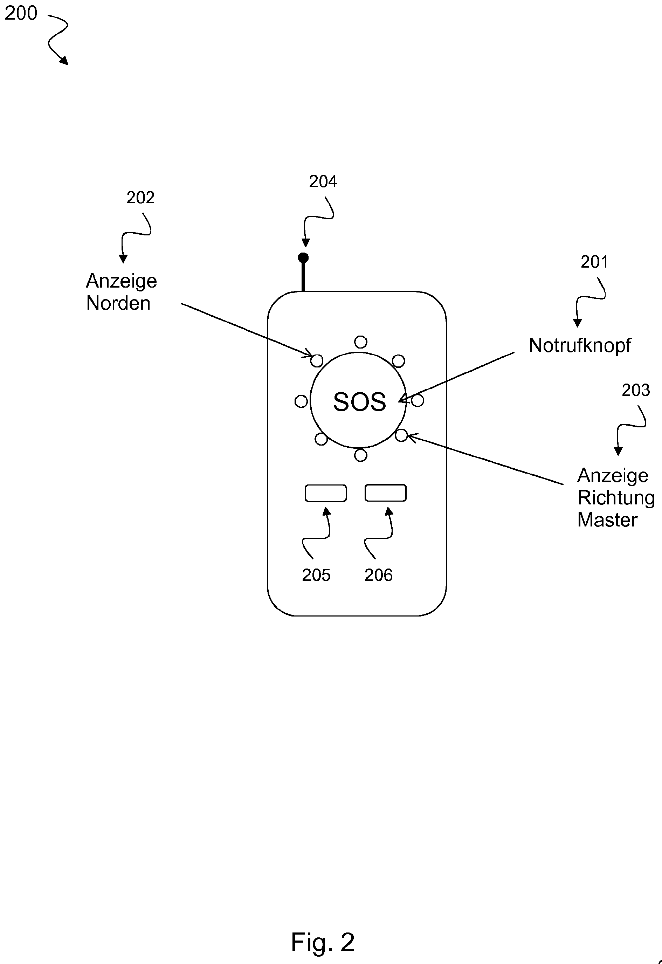

Das Slave-Gerät kann eine Anzeige 203 aufweisen, welche basierend auf den geographischen Positionen des Slave-Geräts und des Master-Geräts eine Richtung 203 zu dem Master-Gerät anzeigt, beispielsweise wie unten zu Figur 2 dargestellt und beschrieben.

Das Slave-Gerät kann einen Magnetometer-Sensor und/oder einen Beschleunigungssensor umfassen und die Richtung 203 zu dem Master-Gerät basierend auf Messdaten des Magnetometer-Sensor und/oder des Beschleunigungssensors bestimmen. Die Bestimmung kann in einem Prozessor des Geräts erfolgen (nicht dargestellt in Fig. 1).

Das Slave-Gerät kann über eine Befestigungseinrichtung verfügen, die ausgebildet ist, das Slave-Gerät an einem Gegenstand, z.B. einem Rucksack oder auch einem Smartphone, zu befestigen.

Das Slave-Gerät kann insbesondere auf ein Mobiltelefon, z.B. ein Smartphone, aufsteckbar sein.

Insbesondere zeigt Figur 1 ein System und ein Verfahren zur Kommunikation und Ortung mit über Funk in einem Peer-to-Peer Netzwerk 110 verbundener Geräte 101, 102, 103, die jeweils einen Notruf auslösen können. Dabei wird in einer mit dem Peer-to-Peer Netzwerk 110 verbundenen Gerätegruppe 101, 102, 103 einem Gerät (z.B. dem Gerät 101) eine Master-Funktion und den anderen Geräte (z.B. Geräten 102, 103) eine Slave-Funktion zugeordnet. Jedes der Geräte 101, 102, 103 kann beispielsweise der Ausführungsform des Geräts 200 aus Figur 2 entsprechen und kann die dort beschriebenen Funktionalität und Merkmale aufweisen.

Die Slave-Geräte 102, 103 erhalten durch ein in ihrem Gehäuse platzierten Licht- oder sonstiger visueller Darstellung (z.B. Anzeige Richtung Master in Figur 2), z.B. mit einem Richtungspfeil auf einer Landkarte, einen Hinweis zur relativ geographischen Lage des Master-Gerätes 101 der Gruppe, welches im Notfall wichtig für das Auffinden von Gruppenteilnehmern bei visueller Einschränkung sein kann. Solche Einschränkungen sind z.B. bei See-Not-Situationen insbesondere bei Dunkelheit oder für Wandergruppen in Wäldern zu gegeben. Ein Master-Gerät kann dann z.B. direkt in einem Rettungsboot oder bei einem Wander- bzw. Gruppenführer platziert sein. Ein Master-Gerät kann ebenso fest installiert z.B. auf einem Schiff oder einer Bake oder Beacon auf See oder im Gelände vorhanden sein. Jedes in einer Gruppe befindliche Notrufgerät kann ebenso über ein übergeordnetes Funknetzwerk, wie z.B. GSM oder LTE, einen Notruf auslösen, der entweder mit SMS, eine IP-Protokoll-Nachricht zu einer Messenger-App oder auch über eine Telefonfunktion eines Gerätes realisiert wird, bei dem die aktuelle geografische Position, die über einen im Gerät vorhandenen Satellitenempfänger bestimmt wird, an eine Servicenummer übermittelt wird. Zusätzlich kann die Übermittlung des Notrufsignals mit geographischer Positionsangabe auch in ein loT (Internet-of-Things)-Netzwerk gesendet werden. IoT-Netzwerke habe den Vorteil einer größeren Durchdringung in schwer zugänglichem Gelände mit Hindernissen, z.B. Berge und Wald, oder auf See. Das IoT-Netzwerk kann z.B. eine Netzwerk nach dem NB loT (Narrowband loT) Standard sein. Damit verbundene Geräte können einen geringeren Energieverbrauch haben und damit eine längere aktive Operationsfähigkeit einer Geräte-Batterie oder eines Geräte-Akkus.

In einer Ausführungsform können die Notrufgeräte in Abhängigkeit des Ladezustandes der jeweiligen Notrufgeräte untereinander den Sendeauftrag eines Notsignals abstimmen. Unter Verwendung einer Signalisierung in einem IoT-Netzwerk kann der Stromverbrauch so gering gehalten werden, dass auf eine Kommunikation und Abstimmung der Sendefähigkeit in einer Gerätegruppe verzichtet werden kann. Ebenso ist die Verwendung eines Peer-to-Peer Netzwerkes energiesparender für die Geräte als die ausschließliche Kommunikation mit Hilfe eines übergeordneten Netzwerkes, wie z.B. GSM, da die Sendeleistung eines Gerätes im Peer-to-Peer Netzwerk geringer sein kann.

Mindestens zwei Geräte (z.B. Geräte 101, 102) können dazu verwendet werden, eine Gruppe mit Notfallfunktion zu bilden. Diese Geräte sind dann sowohl mit einem übergeordneten Funknetzwerk, wie z.B. GSM, LTE o.ä., als auch mit einem untereinander kommunizierenden Peer-to-Peer Netzwerk 110 verbunden. Das Peer-to-Peer Netzwerk 110 kann z.B. über eine 868 MHz oder über Bluetooth oder über LoRaWAN oder über Laser- bzw. Lichtverbindung aufgebaut werden. In einer solchen Gerätegruppe übernimmt ein Gerät eine sogenannte Master-Funktion, während die anderen Geräte eine sogenannte Slave-Funktion erhalten. Die Zuordnung der Master-Funktion kann von einem Nutzer bei der Konfiguration des Notfallverfahrens aktiv festgelegt werden. Dies kann z.B. durch ein SMS Kommando, gesendet von einem SMS fähigen Telefon, oder über eine direkte Programmierung mit einer Verbindung zu einem computerfähigen Gerät erfolgen.

Alternativ kann in einer Gerätegruppe ein Gerät ad-hoc die Masterfunktion übernehmen, z.B. auch wenn ein vorher konfiguriertes Mastergerät nicht im Netzwerk verfügbar ist. Wird das vorher konfigurierte Mastergerät im Lauf der Zeit wieder für das Peer-to-Peer Netzwerk 110 verfügbar, so übernimmt es dann automatisch die Masterfunktion. Vorab kann ein Nutzer eine Hierarchie für eine Gerätegruppe festlegen, d.h. damit wird bestimmt, welches Slave-Gerät als erster die Masterfunktion übernimmt, wenn das zuvor festgelegte Master-Gerät nicht erreichbar ist, und welches dann als drittes usw. Das Master-Gerät 101 überprüft permanent über das Peer-to-Peer Netzwerk 110, ob andere Geräte, d.h. Slave-Geräte 102, 103, im Peer-to-Peer Netzwerk 110 angemeldet und in Reichweite sind. Ebenso überprüft jedes Slave-Gerät 102, 103, ob es mit dem Master-Gerät 101 verbunden ist. Liegt eine solche Verbindung vor, kann dies durch ein Licht- und oder Tonsignal auf dem Gerät angezeigt werden, z.B. über eine LED mit einer bestimmten Farbe, z.B. gemäß der Anzeige 203 in Figur 2. Ebenso wird bei nicht vorhandenem Kontakt, insbesondere eines Slave-Gerätes 102, 103, bei diesem ein Warnsignal angezeigt.

Jedes Gerät der Notfallgruppe verfügt dabei über einen Satellitenempfänger zur Bestimmung der eigenen geographischen Position, z.B. mittels GPS, Galileo oder Glonass, und einem Magnetometer- oder/und einer Beschleunigungsmessungsfunktion. Die aktuelle geographische Position wird im Notfall über das übergeordnete Netzwerk nach Betätigung des Notrufknopfes (z.B. SOS Notrufknopf 201, wie in Fig. 2 dargestellt) versendet. Ebenso wird die geographische Position jedes Slave-Gerätes 102, 103 an das Mastergerät 101 und die geographische Position des Master-Gerätes 101 an alle Slave-Geräte 102, 103 über das Peer-to-Peer Netzwerk 110 gesendet. Mithilfe einer Berechnung der jeweiligen geographischen Positionen in Verbund mit der eigenen Gerätelage durch Magnetometer und/oder Beschleunigungssensor kann auf dem Slave-Gerät 102, 103 die relative Richtung oder Orientierung zum Master-Gerät 101 angezeigt werden, wie in Fig. 2 durch die Anzeige 203 dargestellt. Ebenso kann das Master-Gerät 101 die Orientierung oder Richtung zu einem ausgewählten Slave-Gerät 102, 103 anzeigen. Die Anzeige erfolgt jeweils durch ein Lichtsignal oder durch eine Visualisierung auf den Geräten, z.B. Anzeige 203 wie in Fig. 2 dargestellt. Weiterhin wird zusätzlich der magnetische Nordpol angezeigt, z.B. Anzeige 202 in Fig. 2. Durch unterschiedliche Blinkfrequenzen, Blinkfarben, Leuchtstärken, Ton-Intervall, Lautstärke oder Tonhöhe kann die Distanz zwischen den Geräten 101, 102, 103 angezeigt werden, d.h. dass wenn sich ein Slave 102, 103 vom Master 101 entfernt z.B. ein Leucht- oder Ton-Intervall größer wird.

Die Bestimmung der relativen Lage der Geräte 101, 102, 103 zueinander erfolgt alleine durch die Übertragung der geographischen Daten und die Zuordnung der Gerätelage ohne Messung der magnetischen Erd-Feldstärke. Die Darstellung bzw. Visualisierung der Richtung oder Orientierung zum jeweiligen Gerät oder der Himmelsrichtung Nord kann z.B. über eine kreisrunde Anordnung von Leuchtpunkten (wie in Fig. 2 dargestellt) mit Hilfe von Leuchtdioden erfolgen, die einem Kompass ähneln. Wird als Gerät ein Smartphone verwendet, kann über eine Applikationssoftware eine kompassähnliche Anzeige auf einem Bildschirm realisiert werden. Ebenso kann dann die Geräteposition z.B. auf einer Landkarte angezeigt werden.

Neben der Nutzung der Geräte 101, 102, 103 im Peer-to-Peer Netzwerk 110 für den Seenotfall oder bei Wandergruppen, ist eine Anwendung für Jagdgruppen oder militärische Einheiten vorteilhaft. Ein Jäger kann so informiert werden, in welcher Richtung sich sein Jagdkollege befindet und somit ein Schießunfall vermieden werden. Die beschriebene Gerätefunktion kann dafür in einer Handfeuerwaffe, z.B. einer Pistole, oder in einem Gewehr, z.B. einem Jagdgewehr oder Schnellfeuerwaffe, integriert werden. Auch hierbei werden per Lichtsignal die Distanz der Waffen einer Gruppe zueinander (Anzeige 203 gemäß Fig. 2) sowie die Richtung des Nordpols (Anzeige 202 gemäß Fig. 2) angezeigt. Ebenso ist die Notruffunktion (SOS 201 gemäß Fig. 2) über ein IoT-Netzwerk in Gelände mit schlechter Netzabdeckung für diese Anwendung von Nutzen.

Durch die Integration eines Satellitenempfängers für die Berechnung der eigenen geographischen Funktion ist über die übergeordnete Verbindung mit einem Funknetzwerk das periodische Versenden der geographischen Position an eine Rufnummer ermöglicht. Damit können sogenannte Tracking-Funktionen, d.h. Aufzeichnen der aktuellen geographischen Position und deren Übermittlung in definierten Zeitintervallen an einen zweiten Teilnehmer per Funk, realisiert werden.

Die Konfiguration der Geräte, d.h. die Programmierung von Notruf- und Servicenummern und sonstiger Funktionen, kann durch SMS-Kommandos, über eine Funkverbindung via Smartphone-App oder direkte Kabel- oder Steckverbindung mit einem Computer oder Smartphone erfolgen. Bei Verwendung eines Smartphones kann dazu auch eine Bluetooth oder NFC oder sonstige Funkschnittstelle verwendet werden. Die Geräte einer Notrufgruppe haben ebenso volle Telefonfunktionalität, d.h. Sprachein- und Ausgabe. Die Geräte 101, 102, 103 können eigens gestaltete Notrufgeräte oder auch vorhandene Mobilfunktelefone oder Smartphones sein. Wird ein vorhandenes Mobilfunktelefon verwendet, welches die beschriebenen Funktionen nicht durch die vorhandene Hardware erfüllen kann, kann die Verbindung in ein Peer-to-Peer Netzwerk, die Anbindung an ein IoT-Netzwerk, zusätzliche Visualisierungsfunktionen und eine zusätzliche Batterie oder Akku über eine aufsteckbare Einheit erfolgen, die z.B. auch als Smartphone-Hülle gestaltet sein kann. Weiterhin kann das Notrufgerät oder eine Zusatzeinheit für ein Smartphone ebenso mit einer Signalisierung für Seenotfälle oder einem Lawinenpiepser ausgestattet sein. Ebenso kann ein Wassersensor oder ein Sensor zur Ermittlung eines Sturzes oder Schlages in das Notfallgerät oder der Zusatzeinheit integriert sein, welcher dann einen Notfall auslöst, z.B. im Falle Mann-über-Bord auf einem Schiff auf See.

Fig. 2 zeigt eine schematische Darstellung eines Kommunikationsgeräts 200 gemäß einer beispielhaften Ausführungsform. Das Kommunikationsgerät 200 kann einem der oben zu Figur 1 beschriebenen Kommunikationsgeräte entsprechen. Es umfasst eine Ortungseinrichtung und eine Kommunikationseinrichtung, dargestellt durch die Antenne 204 am Gerät. Beide Einrichtungen können durch einen Prozessor unterstützt werden. Das Kommunikationsgerät 200 umfasst zwei Tasten 205, 206, um Aufbau und Abbau einer Rufverbindung zu den anderen Kommunikationsgeräten der Gruppe und oder ins externe Mobilfunknetz zu initiieren. Das Kommunikationsgerät 200 umfasst einen Notrufknopf 201, über den der Nutzer einen Notruf zu einer Notrufzentrale absetzen kann, z.B. über das Peer-to-Peer Netzwerk 110 an einen Master, der den Notruf weiterleitet oder über das Mobilfunknetz an eine Notrufzentrale. Der Notrufknopf 201 ist als runder Knopf ausgeführt, um den sich ein Ring aus Leuchtdioden gruppieren, von denen eine LED 202 die Richtung nach Norden anzeigt und eine andere LED 203 die Richtung zum Mastergerät anzeigt. Der Aufbau kann natürlich auch eine andere Gestaltung haben als hier oben beschrieben. Das Kommunikationsgerät 200 kann als Notrufgerät bzw. "Emergency Beacon" eingesetzt werden, wie oben zu Figur 1 beschrieben. Es bietet die folgenden Merkmale:
In einem LTE/NB-loT Modul kann das folgende eingestellt werden: Ein/aus; Notruf Zielnummer, Nummernkaskade, Übertragungszeitintervall, GPS Ortsdaten-Übertragungszeitintervall.

In einem Sprachmodul kann das folgende eingestellt werden: Zielnummern, Nummernkaskade, Lautstärke, Automatische Rufantwort, Ruffilter, GPS Ortsdaten-Übertragungszeitintervall.

In einem SMS Module kann das folgende eingestellt werden: SMS Zielnummer, SMS Text, Nummernkaskade.

In einem GPS Module kann das folgende eingestellt werden: Ein/aus, Übertragungszeitintervall, Übertragungskanal (GSM oder LTE/NB loT).

Eine SIM Card bietet die folgenden Einstellungen: Zugangs-PIN, Konfigurations-PIN.

Die Flash Light /LCD Signale signalisieren das Folgende: Ein/aus, Land oder Untergrund Basisaktivitäten, Näherungssignalisierung, Nordpol-Signalisierung.

Eine App zur Konfiguration bietet eine Konfiguration von einem bis zu einer unbegrenzten Zahl an Geräten, Gerätenamen oder ID Nummern, Master/Slave Konfiguration.

Der Batterie-Status zeigt den Batterieladezustand an.

In einem Peer-2-Peer Networking Modul wird das Folgende angezeigt: Näherungssignalisierung ein/aus, Blitzintervall, Batterieschwellwert.

Signaltöne bieten die folgenden Einstellungen: Signalisierung ein/aus Signalisierungszeitintervalle.

Notfallfunktionen bieten die folgenden Konfigurationen: Notruf oder Kommunikationsnummern; Tracking mode; Konfiguration der peer-to-peer Vernetzungsgruppe; Konfiguration von Sprach- und SMS Merkmalen, Setzen von Näherungsoptionen (Signalisierung).

Das Kommunikationsgerät 200 verfügt über die folgenden Schnittstellen bzw. Module:
▪ LTE/ NB-loT (LTE Cat NB1))
▪ Sprache und SMS (LTE Cat M1 oder GSM)
▪ Senden einer Notruf SMS (alle Netzwerke)
▪ GPS mit integrierter Modul-Lösung
▪ SIM an Bord
▪ 8 LEDs zur Signalisierung:
   - Näherung zum Master-Gerät im peer-to-peer Netzwerk
   - magnetischer Nordpol
   - verschiedene Betriebsmodes und funktionelle Modes
▪ Konfiguriert von einem zu vielen Geräten über App
▪ Batterie mit Ladung über USB (Standardmäßiges mobiles USB Ladeteil); 15h standby, Überprüfen des Status beim Einschalten (LED Signalisierung) oder mit einer App
▪ "Powerless On" (spannungsloses Einschalten) nur für Notfälle ▪ Peer-to-peer Netzwerk Lösung mit 868Mhz zur Kommunikation zwischen den Geräten. Nur ein Gerät sendet Notrufsignale aus wenn verschiedene Geräte gruppiert sind, um Batterieleistung zu schonen.
▪ Näherungsberechnung zwischen den Geräten (Blitzlicht-Signalisierung)
▪ Bestimmung des magnetischen Nordpols
▪ Prinzip des Master Geräts mit Slave Geräten
▪ Signalisierungstöne für verschiedene Betriebsmodes und Funktionsmodes
▪ Ein großer zentraler Hauptbedienungsknopf mit spannungsloser ein/aus und sofortiger voller Notruffunktion (NB)
▪ Mode Knopf für privaten Gebrauchsmode, Einstellungen über App, z.B. Sprache und Trackingmode
▪ Dritter Knopf für peer-2-peer Interaktion im vernetzten (mesh) Netzwerk (interne Gruppen Notfallsituationen)
▪ Einschalten wenn in Kontakt mit wasser, Wassersensor mit direktem Senden des Notrufsignals über LTE / NB loT
▪ Widerstandsfähig gegen Salzwasser gemäß IP68

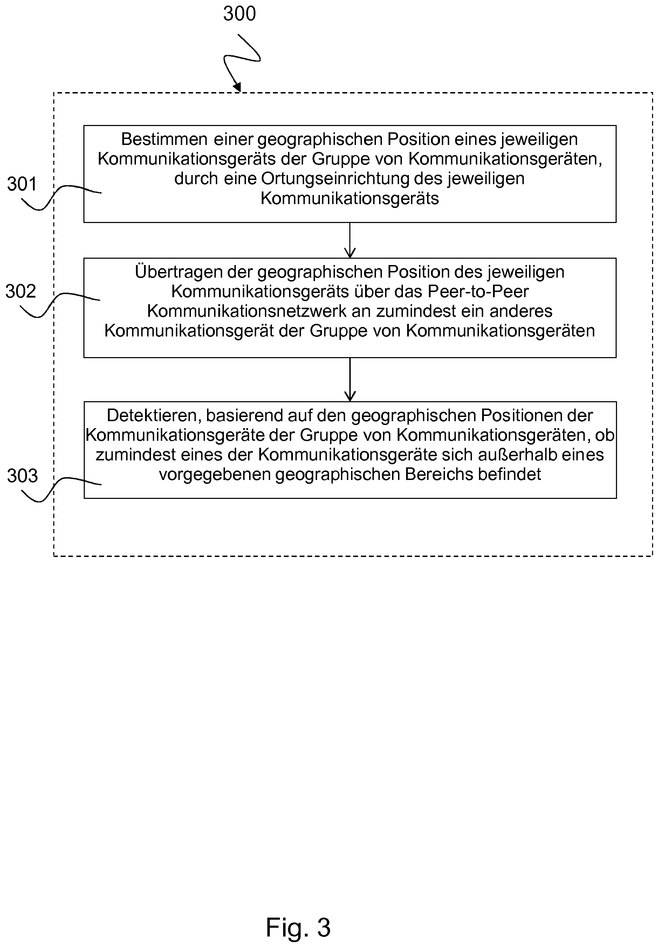

Fig. 3 zeigt eine schematische Darstellung eines Verfahrens 300 zur Kommunikation und Ortung einer Gruppe von zumindest zwei Kommunikationsgeräten über ein drahtloses Peer-to-Peer Kommunikationsnetzwerk gemäß einer beispielhaften Ausführungsform.

Das Verfahren 300 umfasst einen ersten Schritt 301: Bestimmen einer geographischen Position eines jeweiligen Kommunikationsgeräts der Gruppe von Kommunikationsgeräten, durch eine Ortungseinrichtung des jeweiligen Kommunikationsgeräts, wie z.B. zu den Figuren 1 und 2 beschrieben.

Das Verfahren 300 umfasst einen zweiten Schritt 302: Übertragen der geographischen Position des jeweiligen Kommunikationsgeräts über das Peer-to-Peer Kommunikationsnetzwerk an zumindest ein anderes Kommunikationsgerät der Gruppe von Kommunikationsgeräten, wie z.B. zu den Figuren 1 und 2 beschrieben.

Das Verfahren 300 kann ferner einen dritten (optionalen) Schritt 303 umfassen: Detektieren, basierend auf den geographischen Positionen der Kommunikationsgeräte der Gruppe von Kommunikationsgeräten, ob zumindest eines der Kommunikationsgeräte sich außerhalb eines vorgegebenen geographischen Bereichs befindet, wie z.B. zu den Figuren 1 und 2 beschrieben.

Das Verfahren kann einen weiteren Schritt umfassen: Auslösen eines Notrufs, wenn zumindest eines der Kommunikationsgeräte 101, 102, 103 sich außerhalb des vorgegebenen geographischen Bereichs 120 befindet.

Das Verfahren 300 kann weitere Schritte umfassen, entsprechend den Funktionalitäten wie oben zu den Figuren 1 und 2 beschrieben.

Ein Aspekt der Erfindung umfasst auch ein Computerprogrammprodukt, das direkt in den internen Speicher eines digitalen Computers geladen werden kann und Softwarecodeabschnitte umfasst, mit denen die zu Figuren 1 und 2 beschriebenen Schritte bzw. das zu Figur 3 beschriebene Verfahren 300 ausgeführt werden kann, wenn das Produkt auf einem Computer läuft. Das Computerprogrammprodukt kann auf einem computergeeigneten Medium gespeichert sein und computerlesbare Programmittel umfassen, die einen Computer veranlassen, die zu Figuren 1 und 2 beschriebenen Schritte bzw. das zu Figur 3 beschriebene Verfahren 300 auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

## Patentansprüche

1. Kommunikations- und Ortungssystem (100), mit:
einer Gruppe von zumindest zwei Kommunikationsgeräten (101, 102, 103); und
einem drahtlosen Peer-to-Peer Kommunikationsnetzwerk (110), das ausgebildet ist, die Gruppe von Kommunikationsgeräten (101, 102, 103) über Funk untereinander zu verbinden,
wobei jedes Kommunikationsgerät der Gruppe von Kommunikationsgeräten (101, 102, 103) eine Ortungseinrichtung (101b, 102b, 103b) und eine Kommunikationseinrichtung (101a, 102a, 103a) aufweist,
wobei die Ortungseinrichtung (101b, 102b, 103b) ausgebildet ist, eine geographische Position des Kommunikationsgeräts (101, 102, 103) zu bestimmen, und
wobei die Kommunikationseinrichtung (101a, 102a, 103a) ausgebildet ist, die geographische Position des Kommunikationsgeräts über das Peer-to-Peer Kommunikationsnetzwerk (110) an zumindest ein anderes Kommunikationsgerät der Gruppe von Kommunikationsgeräten (101, 102, 103) zu übertragen,
wobei mindestens zwei Kommunikationsgeräte der Gruppe von Kommunikationsgeräten (101, 102, 103) eine Gruppe mit Notruf-Funktion bilden, die sowohl untereinander über das Peer-to-Peer Kommunikationsnetzwerk (110) miteinander verbunden sind als auch über eine externe Verbindung über ein Mobilfunknetzwerk verfügen.

2. Kommunikations- und Ortungssystem (100) nach Anspruch 1,
wobei das Kommunikations- und Ortungssystem (100) ausgebildet ist, basierend auf den geographischen Positionen der Kommunikationsgeräte der Gruppe von Kommunikationsgeräten (101, 102, 103) zu detektieren, ob zumindest eines der Kommunikationsgeräte sich außerhalb (121) eines vorgegebenen geographischen Bereichs (120) befindet.

3. Kommunikations- und Ortungssystem (100) nach Anspruch 2,
wobei der vorgegebene geographische Bereich (120) auf einer Funkreichweite des Peer-to-Peer Kommunikationsnetzwerks (110) basiert oder unabhängig von der Funkreichweite des Peer-to-Peer Kommunikationsnetzwerks (110) festlegbar ist.

4. Kommunikations- und Ortungssystem (100) nach einem der Ansprüche 2 bis 3,
wobei die Gruppe von zumindest zwei Kommunikationsgeräten (101, 102, 103) mobile Kommunikationsgeräte umfasst, und
wobei der vorgegebene geographische Bereich (120) abhängig von einer Bewegung der Gruppe von zumindest zwei Kommunikationsgeräten (101, 102, 103) spezifiziert ist.

5. Kommunikations- und Ortungssystem (100) nach einem der Ansprüche 2 bis 4,
wobei zumindest zwei Kommunikationsgeräte der Gruppe von Kommunikationsgeräten (101, 102, 103) als Notruf-Geräte (200) eine Notruf-Funktion (201) in dem Peer-to-Peer Kommunikationsnetzwerk (110) wahrnehmen und ausgebildet sind, einen Notruf auszulösen, wenn zumindest eines der Kommunikationsgeräte (101) sich außerhalb (121) des vorgegebenen geographischen Bereichs (120) befindet.

6. Kommunikations- und Ortungssystem (100) nach Anspruch 5,
wobei die zumindest zwei Notruf-Geräte (200) sowohl untereinander über das Peer-to-Peer Kommunikationsnetzwerk (110) miteinander verbunden sind als auch über eine externe Verbindung über ein Mobilfunknetzwerk, insbesondere ein GSM, LTE, 4G und/oder 5G Netzwerk, verfügen.

7. Kommunikations- und Ortungssystem (100) nach Anspruch 6,
wobei die zumindest zwei Notruf-Geräte (200) ausgebildet sind, den Notruf alternativ oder zusätzlich zur Verbindung über das Mobilfunknetzwerk über eine Verbindung über ein Internet-of-Things (IoT)-Netzwerk auszulösen.

8. Kommunikations- und Ortungssystem (100) nach Anspruch 6 oder 7,
wobei zumindest eines der zwei Notruf-Geräte (200) eine Kommunikationsschnittstelle zu einem Mobiltelefon, insbesondere einem Smartphone aufweist,
wobei das zumindest eine Notruf-Gerät (200) ausgebildet ist, die externe Verbindung über die Kommunikationsschnittstelle zu dem Mobiltelefon aufzubauen.

9. Kommunikations- und Ortungssystem (100) nach Anspruch 8,
wobei die Kommunikationsschnittstelle zu dem Mobiltelefon ausgebildet ist, Daten über SMS und/oder über eine IP-Verbindung zu senden.

10. Kommunikations- und Ortungssystem (100) nach einem der vorstehenden Ansprüche,
wobei das Peer-to-Peer Kommunikationsnetzwerk (110) ein GSM, LTE, 4G und/oder 5G Netzwerk umfasst und/oder zumindest teilweise eine optische Signalübertragung umfasst.

11. Kommunikations- und Ortungssystem (100) nach einem der vorstehenden Ansprüche,
wobei zumindest ein Kommunikationsgerät der Gruppe von zumindest zwei Kommunikationsgeräten (101, 102, 103) als Master-Gerät eine Master-Funktion in dem Peer-to-Peer Kommunikationsnetzwerk (110) wahrnimmt; und
wobei zumindest ein anderes Kommunikationsgerät der Gruppe von zumindest zwei Kommunikationsgeräten (101, 102, 103) als Slave-Gerät eine Slave-Funktion in dem Peer-to-Peer Kommunikationsnetzwerk (110) wahrnimmt und dem Master-Gerät zugeordnet ist.

12. Kommunikations- und Ortungssystem (100) nach Anspruch 11,
wobei das Master-Gerät ausgebildet ist, die geographischen Positionen der ihm zugeordneten Slave-Geräte über das Peer-to-Peer Kommunikationsnetzwerk (110) zu empfangen und basierend auf den empfangenen geographischen Positionen zu überwachen, ob die Slave-Geräte sich innerhalb des vorgegebenen geographischen Bereichs (120) befinden.

13. Kommunikations- und Ortungssystem (100) nach Anspruch 11 oder 12,
wobei das Slave-Gerät ausgebildet ist, die geographische Position des ihm zugeordneten Master-Geräts über das Peer-to-Peer Kommunikationsnetzwerk (110) zu empfangen und ein Alarmsignal auszulösen, wenn das Slave-Gerät basierend auf den geographischen Positionen des Slave-Geräts und des Master-Geräts detektiert, dass sich das Slave-Gerät außerhalb des vorgegebenen geographischen Bereichs (120) befindet.

14. Kommunikations- und Ortungssystem (100) nach einem der Ansprüche 11 bis 13,
wobei das Slave-Gerät eine Anzeige aufweist, welche ausgebildet ist, basierend auf den geographischen Positionen des Slave-Geräts und des Master-Geräts eine Richtung (203) zu dem Master-Gerät anzuzeigen.

15. Kommunikations- und Ortungssystem (100) nach Anspruch 14,
wobei das Slave-Gerät einen Magnetometer-Sensor und/oder einen Beschleunigungssensor umfasst und ausgebildet ist, die Richtung (203) zu dem Master-Gerät basierend auf Messdaten des Magnetometer-Sensor und/oder des Beschleunigungssensors zu bestimmen.

16. Kommunikations- und Ortungssystem (100) nach einem der Ansprüche 11 bis 15,
wobei das Slave-Gerät über eine Befestigungseinrichtung verfügt, die ausgebildet ist, das Slave-Gerät an einem Gegenstand zu befestigen.

17. Kommunikations- und Ortungssystem (100) nach einem der Ansprüche 11 bis 16,
wobei das Slave-Gerät auf ein Mobiltelefon, insbesondere ein Smartphone, aufsteckbar ist.

18. Kommunikations- und Ortungssystem (100) nach einem der vorstehenden Ansprüche,
wobei das Slave-Gerät an einem Gerät, insbesondere einer Feuerwaffe oder einer Maschine, befestigbar oder integrierbar ist, und ausgelegt ist, eine Richtung zu einem anderen Gerät, insbesondere einer anderen Feuerwaffe oder einer anderen Maschine, an dem das Master-Gerät befestigbar oder integrierbar ist, anzuzeigen.

19. Kommunikations- und Ortungssystem (100) nach einem der vorstehenden Ansprüche,
wobei zumindest ein Kommunikationsgerät der Gruppe von Kommunikationsgeräten (101, 102, 103) als ein Smartphone ausgebildet ist.

20. Verfahren (300) zur Kommunikation und Ortung einer Gruppe von zumindest zwei Kommunikationsgeräten (101, 102, 103) über ein drahtloses Peer-to-Peer Kommunikationsnetzwerk (110), das ausgebildet ist, die Gruppe von Kommunikationsgeräten über Funk untereinander zu verbinden, wobei mindestens zwei Kommunikationsgeräte der Gruppe von Kommunikationsgeräten (101, 102, 103) eine Gruppe mit Notruf-Funktion bilden, die sowohl untereinander über das Peer-to-Peer Kommunikationsnetzwerk (110) miteinander verbunden sind als auch über eine externe Verbindung über ein Mobilfunknetzwerk verfügen, mit folgenden Schritten:
Bestimmen (301) einer geographischen Position eines jeweiligen Kommunikationsgeräts der Gruppe von Kommunikationsgeräten, durch eine Ortungseinrichtung des jeweiligen Kommunikationsgeräts; und
Übertragen (302) der geographischen Position des jeweiligen Kommunikationsgeräts über das Peer-to-Peer Kommunikationsnetzwerk an zumindest ein anderes Kommunikationsgerät der Gruppe von Kommunikationsgeräten.

21. Verfahren (300) nach Anspruch 20, ferner mit:
Detektieren (303), basierend auf den geographischen Positionen der Kommunikationsgeräte der Gruppe von Kommunikationsgeräten, ob zumindest eines der Kommunikationsgeräte sich außerhalb eines vorgegebenen geographischen Bereichs befindet.

22. Verfahren (300) nach Anspruch 21, ferner mit:
Auslösen eines Notrufs, wenn zumindest eines der Kommunikationsgeräte (101, 102, 103) sich außerhalb des vorgegebenen geographischen Bereichs (120) befindet.

## Claims

1. Communication and locating system (100) having:
a group of at least two communication units (101, 102, 103); and
a wireless peer-to-peer communication network (110) which is configured to connect the group of communication units (101, 102, 103) to one another via radio,
wherein each communication unit in the group of communication units (101, 102, 103) has a locating device (101b, 102b, 103b) and a communication device (101a, 102a, 103a),
wherein the locating device (101b, 102b, 103b) is configured to determine a geographical position of the communication unit (101, 102, 103), and
wherein the communication device (101a, 102a, 103a) is configured to transmit the geographical position of the communication unit to at least one other communication unit in the group of communication units (101, 102, 103) via the peer-to-peer communication network (110),
wherein at least two communication units in the group of communication units (101, 102, 103) form a group with an emergency call function, which are both connected to one another via the peer-to-peer communication network (110) and have an external connection via a mobile radio network.

2. Communication and locating system (100) according to Claim 1,
wherein the communication and locating system (100) is configured to detect, on the basis of the geographical positions of the communication units in the group of communication units (101, 102, 103), whether at least one of the communication units is outside (121) a predefined geographical area (120).

3. Communication and locating system (100) according to Claim 2,
wherein the predefined geographical area (120) is based on a radio range of the peer-to-peer communication network (110) or can be stipulated independently of the radio range of the peer-to-peer communication network (110) .

4. Communication and locating system (100) according to one of Claims 2 to 3,
wherein the group of at least two communication units (101, 102, 103) comprises mobile communication units, and
wherein the predefined geographical area (120) is specified on the basis of a movement of the group of at least two communication units (101, 102, 103).

5. Communication and locating system (100) according to one of Claims 2 to 4,
wherein at least two communication units in the group of communication units (101, 102, 103), as emergency call units (200), perform an emergency call function (201) in the peer-to-peer communication network (110) and are configured to trigger an emergency call if at least one of the communication units (101) is outside (121) the predefined geographical area (120).

6. Communication and locating system (100) according to Claim 5,
wherein the at least two emergency call units (200) are both connected to one another via the peer-to-peer communication network (110) and have an external connection via a mobile radio network, in particular a GSM, LTE, 4G and/or 5G network.

7. Communication and locating system (100) according to Claim 6,
wherein the at least two emergency call units (200) are configured to trigger the emergency call via a connection via an Internet-of-Things (IoT) network as an alternative or in addition to the connection via the mobile radio network.

8. Communication and locating system (100) according to Claim 6 or 7,
wherein at least one of the two emergency call units (200) has a communication interface to a mobile telephone, in particular a smartphone,
wherein the at least one emergency call unit (200) is configured to set up the external connection via the communication interface to the mobile telephone.

9. Communication and locating system (100) according to Claim 8,
wherein the communication interface to the mobile telephone is configured to transmit data via SMS and/or via an IP connection.

10. Communication and locating system (100) according to one of the preceding claims,
wherein the peer-to-peer communication network (110) comprises a GSM, LTE, 4G and/or 5G network and/or at least partially comprises optical signal transmission.

11. Communication and locating system (100) according to one of the preceding claims,
wherein at least one communication unit in the group of at least two communication units (101, 102, 103), as a master unit, performs a master function in the peer-to-peer communication network (110); and
wherein at least one other communication unit in the group of at least two communication units (101, 102, 103), as a slave unit, performs a slave function in the peer-to-peer communication network (110) and is assigned to the master unit.

12. Communication and locating system (100) according to Claim 11,
wherein the master unit is configured to receive the geographical positions of the slave units assigned to it via the peer-to-peer communication network (110) and to monitor, on the basis of the received geographical positions, whether the slave units are within the predefined geographical area (120).

13. Communication and locating system (100) according to Claim 11 or 12,
wherein the slave unit is configured to receive the geographical position of the master unit assigned to it via the peer-to-peer communication network (110) and to trigger an alarm signal if the slave unit detects, on the basis of the geographical positions of the slave unit and of the master unit, that the slave unit is outside the predefined geographical area (120).

14. Communication and locating system (100) according to one of Claims 11 to 13,
wherein the slave unit has a display which is configured to display a direction (203) to the master unit on the basis of the geographical positions of the slave unit and of the master unit.

15. Communication and locating system (100) according to Claim 14,
wherein the slave unit comprises a magnetometer sensor and/or an acceleration sensor and is configured to determine the direction (203) to the master unit on the basis of measurement data from the magnetometer sensor and/or from the acceleration sensor.

16. Communication and locating system (100) according to one of Claims 11 to 15,
wherein the slave unit has a fastening device which is configured to fasten the slave unit to an object.

17. Communication and locating system (100) according to one of Claims 11 to 16,
wherein the slave unit can be attached to a mobile telephone, in particular a smartphone.

18. Communication and locating system (100) according to one of the preceding claims,
wherein the slave unit can be fastened to or integrated in a unit, in particular a firearm or a machine, and is configured to display a direction to another unit, in particular another firearm or another machine, to which or in which the master unit can be fastened or integrated.

19. Communication and locating system (100) according to one of the preceding claims,
wherein at least one communication unit in the group of communication units (101, 102, 103) is configured as a smartphone.

20. Method (300) for communicating with and locating a group of at least two communication units (101, 102, 103) via a wireless peer-to-peer communication network (110) which is configured to connect the group of communication units to one another via radio, wherein at least two communication units in the group of communication units (101, 102, 103) form a group with an emergency call function, which are both connected to one another via the peer-to-peer communication network (110) and have an external connection via a mobile radio network, having the following steps of:
determining (301) a geographical position of a respective communication unit in the group of communication units by means of a locating device of the respective communication unit; and
transmitting (302) the geographical position of the respective communication unit to at least one other communication unit in the group of communication units via the peer-to-peer communication network.

21. Method (300) according to Claim 20, also comprising:
detecting (303), on the basis of the geographical positions of the communication units in the group of communication units, whether at least one of the communication units is outside a predefined geographical area.

22. Method (300) according to Claim 21, also comprising:
triggering an emergency call if at least one of the communication units (101, 102, 103) is outside the predefined geographical area (120).

## Revendications

1. Système de communication et de positionnement (100), comprenant :
un groupe d'au moins deux appareils de communication (101, 102, 103) ; et
un réseau de communication poste à poste sans fil (110) conçu pour relier entre eux par radio le groupe d'appareils de communication (101, 102, 103),
dans lequel chaque appareil de communication du groupe d'appareils de communication (101, 102, 103) comporte un dispositif de positionnement (101b, 102b, 103b) et un dispositif de communication (101a, 102a, 103a),
dans lequel le dispositif de positionnement (101b, 102b, 103b) est conçu pour déterminer une position géographique de l'appareil de communication (101, 102, 103), et
dans lequel le dispositif de communication (101a, 102a, 103a) est conçu pour transmettre la position géographique de l'appareil de communication par l'intermédiaire du réseau de communication poste à poste (110) à au moins un autre appareil de communication du groupe d'appareils de communication (101, 102, 103),
dans lequel au moins deux appareils de communication du groupe d'appareils de communication (101, 102, 103) forment un groupe à fonction d'appel d'urgence, et sont non seulement reliés entre eux par l'intermédiaire du réseau de communication poste à poste (110) mais disposent également d'une liaison externe par l'intermédiaire d'un réseau radio mobile.

2. Système de communication et de positionnement (100) selon la revendication 1,
dans lequel le système de communication et de positionnement (100) est conçu pour détecter, sur la base des positions géographiques des appareils de communication du groupe d'appareils de communication (101, 102, 103), si au moins l'un des appareils de communication se trouve en dehors (121) d'une zone géographique prédéterminée (120).

3. Système de communication et de positionnement (100) selon la revendication 2,
dans lequel la zone géographique prédéterminée (120) peut être établie sur la base d'une portée radio du réseau de communication poste à poste (110) ou indépendamment de la portée radio du réseau de communication poste à poste (110) .

4. Système de communication et de positionnement (100) selon l'une quelconque des revendications 2 à 3, dans lequel le groupe d'au moins deux appareils de communication (101, 102, 103) comprend des appareils de communication mobiles, et
dans lequel la zone géographique prédéterminée (120) est spécifiée en fonction d'un mouvement du groupe d'au moins deux appareils de communication (101, 102, 103).

5. Système de communication et de positionnement (100) selon l'une quelconque des revendications 2 à 4, dans lequel au moins deux appareils de communication du groupe d'appareils de communication (101, 102, 103) remplissent une fonction d'appel d'urgence (201) en tant qu'appareils d'appel d'urgence (200) dans le réseau de communication poste à poste (110) et sont conçus pour déclencher un appel d'urgence lorsqu'au moins l'un des appareils de communication (101) se trouve en dehors (121) de la zone géographique prédéterminée (120).

6. Système de communication et de positionnement (100) selon la revendication 5,
dans lequel lesdits au moins deux appareils d'appel d'urgence (200) sont reliés entre eux non seulement par le réseau de communication poste à poste (110) mais également par une liaison externe par l'intermédiaire d'un réseau de téléphonie mobile, en particulier un réseau GSM, LTE, 4G et/ou 5G.

7. Système de communication et de localisation (100) selon la revendication 6,
dans lequel lesdits au moins deux appareils d'appel d'urgence (200) sont conçus pour déclencher l'appel d'urgence en variante ou en plus de la liaison par le réseau radio mobile, par une liaison par l'intermédiaire d'un réseau Internet des objets (IoT).

8. Système de communication et de positionnement (100) selon la revendication 6 ou 7,
dans lequel au moins l'un des deux appareils d'appel d'urgence (200) comporte une interface de communication avec un téléphone mobile, en particulier un téléphone intelligent,
dans lequel ledit au moins un appareil d'appel d'urgence (200) est conçu pour établir la liaison externe avec le téléphone mobile par l'intermédiaire de l'interface de communication.

9. Système de communication et de positionnement (100) selon la revendication 8,
dans lequel l'interface de communication avec le téléphone mobile est conçue pour envoyer des données par SMS et/ou par l'intermédiaire d'une liaison IP.

10. Système de communication et de positionnement (100) selon l'une quelconque des revendications précédentes,
dans lequel le réseau de communication poste à poste (110) comprend un réseau GSM, LTE, 4G et/ou 5G et/ou comprend au moins partiellement une transmission de signal optique.

11. Système de communication et de positionnement (100) selon l'une quelconque des revendications précédentes,
dans lequel au moins un appareil de communication du groupe d'au moins deux appareils de communication (101, 102, 103) remplit une fonction de maître en tant qu'appareil maître dans le réseau de communication poste à poste (110) ; et
dans lequel au moins un autre appareil de communication du groupe d'au moins deux appareils de communication (101, 102, 103) remplit une fonction d'esclave en tant qu'appareil esclave dans le réseau de communication poste à poste (110) et est associé à l'appareil maître.

12. Système de communication et de positionnement (100) selon la revendication 11,
dans lequel l'appareil maître est conçu pour recevoir les positions géographiques des appareils esclaves qui lui sont associés par l'intermédiaire du réseau de communication poste à poste (110) et pour surveiller, sur la base des positions géographiques reçues, si les appareils esclaves se trouvent dans la zone géographique prédéterminée (120).

13. Système de communication et de positionnement (100) selon la revendication 11 ou 12,
dans lequel l'appareil esclave est conçu pour recevoir la position géographique de l'appareil maître qui lui est associé par l'intermédiaire du réseau de communication poste-à-poste (110) et pour déclencher un signal d'alarme lorsque l'appareil esclave détecte, sur la base des positions géographiques de l'appareil esclave et de l'appareil maître, que l'appareil esclave se trouve en dehors de la zone géographique prédéterminée (120).

14. Système de communication et de positionnement (100) selon l'une quelconque des revendications 11 à 13, dans lequel l'appareil esclave comporte un afficheur conçu pour afficher, sur la base des positions géographiques de l'appareil esclave et de l'appareil maître, une direction (203) de l'appareil maître.

15. Système de communication et de positionnement (100) selon la revendication 14,
dans lequel l'appareil esclave comprend un capteur magnétométrique et/ou un capteur d'accélération et est conçu pour déterminer la direction (203) de l'appareil maître sur la base de données de mesure du capteur magnétométrique et/ou du capteur d'accélération.

16. Système de communication et de positionnement (100) selon l'une quelconque des revendications 11 à 15, dans lequel l'appareil esclave comporte un dispositif de fixation conçu pour fixer l'appareil esclave à un objet.

17. Système de communication et de positionnement (100) selon l'une quelconque des revendications 11 à 16, dans lequel l'appareil esclave peut être branché sur un téléphone mobile, en particulier un téléphone intelligent.

18. Système de communication et de positionnement (100) selon l'une quelconque des revendications précédentes,
dans lequel l'appareil esclave peut être fixé ou intégré à un appareil, en particulier une arme à feu ou une machine, et est conçu pour afficher une direction d'un autre appareil, en particulier d'une autre arme à feu ou d'une autre machine, auquel l'appareil maître peut être fixé ou intégré.

19. Système de communication et de positionnement (100) selon l'une quelconque des revendications précédentes,
dans lequel au moins un appareil de communication du groupe d'appareils de communication (101, 102, 103) est réalisé sous la forme d'un téléphone intelligent.

20. Procédé (300) de communication et de positionnement d'un groupe d'au moins deux appareils de communication (101, 102, 103) par l'intermédiaire d'un réseau de communication poste à poste sans fil (110) conçu pour relier entre eux par radio le groupe d'appareils de communication,
dans lequel au moins deux appareils de communication du groupe d'appareils de communication (101, 102, 103) forment un groupe à fonction d'appel d'urgence et sont non seulement reliés entre eux par l'intermédiaire du réseau de communication poste à poste (110) mais disposent également d'une liaison externe par l'intermédiaire d'un réseau radio mobile,
comprenant les étapes consistant à :
déterminer (301) une position géographique d'un appareil de communication respectif du groupe d'appareils de communication au moyen d'un dispositif de positionnement de l'appareil de communication respectif ; et
transmettre (302) la position géographique de l'appareil de communication respectif par l'intermédiaire du réseau de communication poste à poste à au moins un autre appareil de communication du groupe d'appareils de communication.

21. Procédé (300) selon la revendication 20, consistant en outre à détecter (303), sur la base des positions géographiques des appareils de communication du groupe d'appareils de communication, si au moins l'un des appareils de communication se trouve en dehors d'une zone géographique prédéterminée.

22. Procédé (300) selon la revendication 21, consistant en outre à :
déclencher un appel d'urgence lorsqu'au moins l'un des appareils de communication (101, 102, 103) se trouve en dehors de la zone géographique prédéterminée (120).
